# EUROPEAN PATENT SPECIFICATION

(11) **EP 3 305 560 B1**
(45) Date of publication and mention of the grant of the patent: **28.08.2019**
(21) Application number: 17192061.4
(22) Date of filing: 20.09.2017
(51) Int. Cl.: B60C 11/24

(54) **TIRE FACILITATING A CHECK OF THE WEAR CONDITION**
REIFEN ZUR ERLEICHTERUNG DER PRÜFUNG DES VERSCHLEISSZUSTANDS
PNEU FACILITANT LA VÉRIFICATION DE L'ÉTAT D'USURE

(30) Priority: 05.10.2016 KR 20160128268
(43) Date of publication of application: 11.04.2018
(73) Proprietor: Kumho Tire Co., Inc., Gwangju 62392 (KR)
(72) Inventor: KIM, Tae Min, 17076 Gyeonggi-do (KR)
(74) Representative: Schweitzer, Klaus

(56) References cited:
- DE-A1-102014 217 151
- JP-A- 2006 232 152
- JP-A- 2016 159 712
- US-A1- 2015 035 971

## Description

### [Technical Field]

The present invention relates to a tire facilitating a check of wear condition, and more particularly, to a tire facilitating a check of wear condition capable of estimating a replacement time of a tire by recognizing information on wear condition of the tire.

### [Background Art]

In accordance with recent development of vehicle industries, development of a tire industry field has also been accelerated. Products optimized for each condition such as road condition, weather, a type of vehicle, fuel efficiency, connectivity with IT devices, and the like have been developed from a simple functional purpose of a circular wheel of simply rolling to move, and have been released. To this end, detailed elements with functional purpose in a tire have been increased. One of the elements is a wear level information display device.

A wear level for evaluating how long the tire can be used is one of important performances of the tire. Information on wear of a tire is essential in order for a user to safely drive from a time when the user buys the tire until the tire is used for driving of a certain distance and discarded.

In order to effectively deliver the information to the user, display devices are applied to a tire. Generally, the tire can sufficiently support a load of a vehicle and absorb and attenuate shock from a road surface, and sufficiently transfer a driving force, a braking force, a lateral force, and the like.

Further, in order to prevent a decrease in functions of the driving force, the braking force, and the lateral force of the tire, a check of wear condition of the tire should be essentially performed.

If a vehicle is driven with an excessively worn tire, hydroplaning may easily occur on a wet road, and a braking distance on a road surface is increased, thereby causing a vehicle accident.

As an example of a related art, Korean Patent Laid-Open Publication No. 10-1997-0020488 discloses an apparatus for checking tire wear condition of a vehicle, which includes a first sensor means disposed to detect a height to an outer circumferential surface of a tire, a second sensor means disposed to detect a height to a groove surface of the tire, and a circuit device having a display means displaying wear condition of the tire based on a difference in input obtained by comparing heights input from the first and second sensor means.

However, the apparatus for checking wear condition of a tire of the related art is disadvantageous in that the user cannot frequently check the condition of the tire regardless of place and time as necessary.

### [Prior Art Document]

### [Patent Document]

(Patent Document 1) Korean Patent Laid-Open Publication No. 10-1997-0020488.

US 2015/0035971 A1, on which the preamble of independent claim 1 is based, discloses a method for determining the profile depth of a tire tread by a wear indicator which is a radially extending visible incision which becomes shorter as wear increases.

JP2016-159712 A discloses a wear indicator of a tire tread in the form of a spiral incision in the surface of the tread with a constantly increasing depth.

DE10 2014 217 151 A1 discloses a manner of indicating an uneven inner/outer wear of a tire tread by a sequence of grooves, e.g. three, on the inner and the outer surface-part of the tread with constantly increasing depth.

JP2006 232 152 discloses a manner of indicating the wear conditions of a tire tread by a sequence of recesses in the tread with constantly increasing depth.

### [Disclosure]

### [Technical Problem]

In consideration of the above-mentioned circumstances, it is an object of the present invention to provide a tire facilitating a check of wear condition that allows a user to visually check a progress of wear and information on a wear threshold of the tire.

Another object of the present invention is to provide a tire facilitating a check of wear condition that may significantly reduce defects by applying a mold with a simple shape in a vertical direction to prevent a tearing phenomenon during mass production of tires.

### [Technical Solution]

In order to achieve the above-described object, according to the present invention, there is provided a tire facilitating a check of wear condition as claimed in claim 1. The tire comprises:
a wear mark which is engraved in a tread to provide information on a degree of wear of the tread, wherein the wear mark comprises:
a pair of guide groove parts which are formed in the tread being engraved so as to be symmetric to each other with a distance therebetween; and an indicator groove part which is formed in the tread being engraved while having a depth increased from one side toward the other side in a longitudinal direction between the guide groove parts. Throughout the specification and the claims the term "depth" is meant to indicate the distance measured from the road contact surface of the tire radially into the tire.

In the present invention, a depth of the pair of guide groove parts may be identical to or shallower than a depth of a groove of the tread.

In the present invention, the pair of guide groove parts may preferably be formed to have a curved shape forming a sandglass shape in the tread.

In the present invention, the indicator groove part includes one groove, and the groove is formed in an inclined shape so as to have a difference in depths from the one side to the other side of the pair of guide groove parts.

In the present invention, the groove formed on the other side of the pair of guide groove parts has a projection member which is formed in the tread so as to display a warning symbol at the time of reaching a wear threshold of the tread.

### [Advantageous Effects]

According to the tire facilitating a check of wear condition in accordance with the present invention, a plurality of wear marks formed in a tread are worn and worn out in stages, thereby allowing a user to visually check information on a degree of wear of the tire.

### [Description of Drawings]

FIGS. 1(a) to (d) are schematic views of a first mold provided to implement a tire facilitating a check of wear condition according to a first embodiment which does not belong to the present invention.
FIG. 2 is a schematic cross-sectional view of the tire facilitating a check of wear condition according to the first embodiment, which is formed by applying the first mold of FIG. 1 to a tread.
FIGS. 3(a) to (e) are schematic views illustrating use states in an order of wear of the tire facilitating a check of wear condition according to the first embodiment of FIG. 2.
FIGS. 4(a) to (d) are schematic views of a second mold provided to implement a tire facilitating a check of wear condition according to a second embodiment which belongs to the present invention.
FIG. 5 is a schematic cross-sectional view of the tire facilitating a check of wear condition according to the second embodiment, which is formed by applying the second mold of FIG. 4 to the tread.
FIGS. 6(a) to (e) are schematic views illustrating use states in an order of wear of the tire facilitating a check of wear condition according to the second embodiment of FIG. 5.
FIGS. 7(a) and (b) are schematic views illustrating use states of the tires facilitating a check of wear condition according to the first and second embodiments.

### [Best Mode]

Hereinafter, a preferred embodiment of the present invention will be described in terms of a configuration and an operation thereof with reference to the accompanying drawings in detail. In describing the present invention, to facilitate overall understanding, identical reference numerals will be denoted to portions performing similar functions and operations throughout the accompanying drawings, and the identical components will not be described.

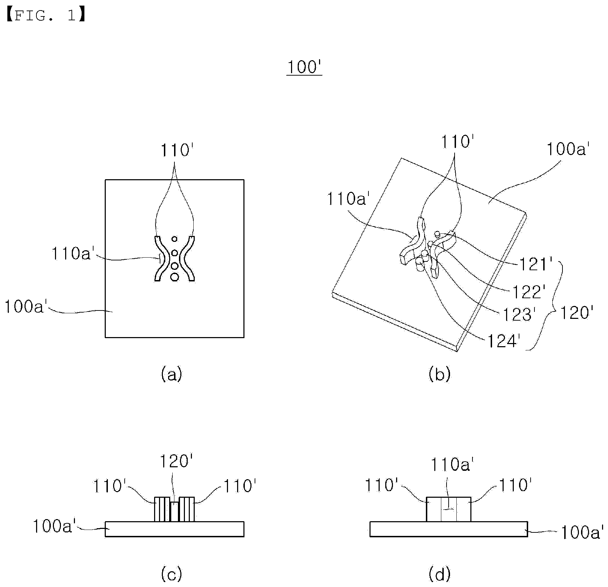

FIGS. 1(a) to (d) are schematic views of a first mold provided to implement a tire facilitating a check of wear condition according to a first embodiment which does not belong to the present invention.

As illustrated in FIG. 1, a first mold 100' includes a plate 100a', first molding parts 110', and a second molding part 120'.

The plate 100a' is formed in a flat-plate shape.

The first molding parts 110' extend in an erected shape from the plate 100a', are formed in pair to be symmetric to each other with a predetermined distance therebetween. In addition, the first molding parts 110' are preferably formed in a sandglass shape in which middle portions thereof are concavely bent in directions opposite to each other.

The second molding part 120' is disposed between the first molding parts 110', extends in an erected shape from the plate 100a', and is formed with a difference in lengths from one side to the other side in a longitudinal direction of the first molding part 110'.

The second molding part 120' may include a first molding protrusion 121' positioned on one side of the first molding part 110', a second molding protrusion 122' that is separated toward the other side of the first molding part 110' from the first molding protrusion 121', a third molding protrusion 123' that is separated toward the other side of the first molding part 110' from the second molding protrusion 122', and a fourth molding protrusion 124' that is separated toward the other side of the first molding part 110' from the third molding protrusion 123'.

The second molding part 120' including the first to fourth molding protrusions 121', 122', 123' and 124' is merely illustrated as an example, thus a configuration of the second molding part 120' is not limited thereto, but may be formed in various shapes.

Using the first mold 100' is to significantly reduce defects by a simple shape to prevent a tearing phenomenon during mass production of a tire with being engraved in a tread 1 to be described below.

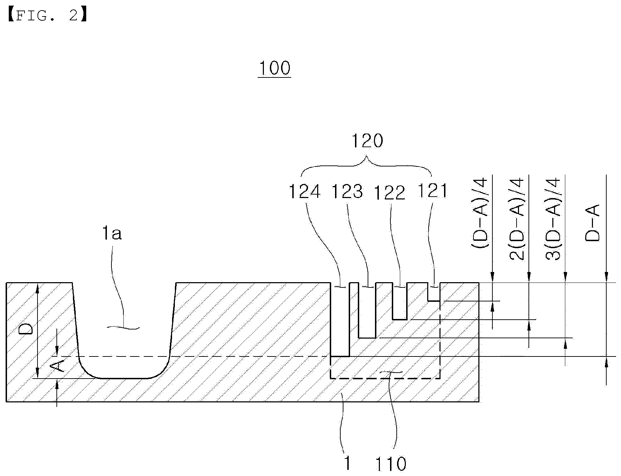

FIG. 2 is a schematic cross-sectional view of the tire facilitating a check of wear condition according to the first embodiment, which is formed by applying the first mold of FIG. 1 to a tread.

As illustrated in FIG. 2, the tire facilitating a check of wear condition includes a wear mark 100 engraved in the tread 1 to provide information on a degree of wear of the tread 1.

The wear mark 100 is formed in the tread 1 by the first mold 100'.

The wear mark 100 includes guide groove parts 110 and an indicator groove part 120, wherein the guide groove parts 110 are formed in pair with being engraved in the tread 1 to be symmetric to each other with a predetermined distance therebetween, and the indicator groove part 120 is formed with being engraved between the guide groove parts 110 in the tread 1 with a difference in depths from one side to the other side in the length direction.

As described above with reference to FIG. 1, the guide groove parts 110 are preferably formed in a sandglass shape in the tread 1 by the first molding parts 110', and a depth of the guide groove part 110 may be identical to or shallower than a wear threshold (D-A) of the tread 1, that is, a depth of a groove 1a thereof.

As described above with reference to FIG. 1, the indicator groove part 120 includes a plurality of grooves in the tread 1 by the second molding part 120', and the grooves are formed with a difference in depths for each stage from one side to the other side of the guide groove part 110 at a predetermined distance.

The indicator groove part 120 includes a first groove 121 formed by the first molding protrusion 121', a second groove 122 formed by the second molding protrusion 122', a third groove 123 formed by the third molding protrusion 123', and a fourth groove 124 formed by the fourth molding protrusion 124'.

The first groove 121 is formed at a depth of (D-A)/4 within the wear threshold (D-A), and the second groove 122 is formed at a depth of 2(D-A)/4 within the wear threshold (D-A).

Further, the third groove 123 is formed at a depth of 3(D-A)/4 within the wear threshold (D-A), and the fourth groove 124 is formed at a depth of the wear threshold (D-A).

The indicator groove part 120 has a difference in depths for each stage in order to be worn out in an order from one side toward the other side of the guide groove part 110 according to the degree of wear of the tread 1.

Accordingly, the wear condition of the tire can be checked through the indicator groove part 120, and the degree of wear of the tire can be recognized by depths of the first to fourth grooves 121 to 124 in an order from the first groove to the fourth groove.

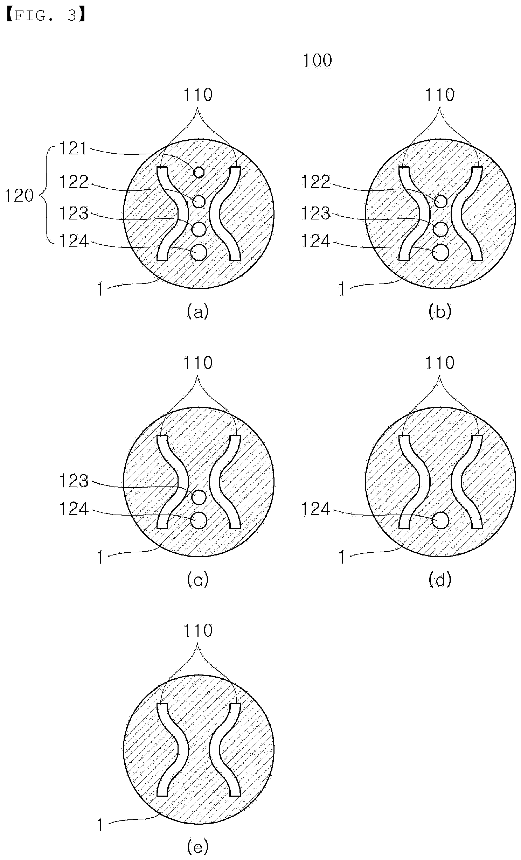

FIGS. 3(a) to (e) are schematic views illustrating use states in an order of wear of the tire facilitating a check of wear condition according to the first embodiment of FIG. 2.

The wear mark 100 is formed with being engraved in the tread 1 by the first mold 100' illustrated in FIG. 1.

As illustrated in FIG. 3, the guide groove part 110 and the indicator groove part 120 are formed in the tread 1, and the indicator groove part 120 is worn out from one side toward the other side of the guide groove part 110 according to the degree of wear of the tread 1.

The indicator groove part 120 is worn out in an order from FIG. 3(a) to FIG. 3(b), from FIG. 3(b) to FIG. 3(c), from FIG. 3(c) to FIG. 3(d), from FIG. 3(d) to FIG. 3(e), and in the case of FIG. 3(e), it shows that the tire needs to be replaced for safe driving of the vehicle, as the indicator groove part 120 is completely worn out to reach the wear threshold.

Further, the wear mark 100 is preferably formed in a sandglass shape, thus has a visual effect of indicating the wear of the tread 1 in progress.

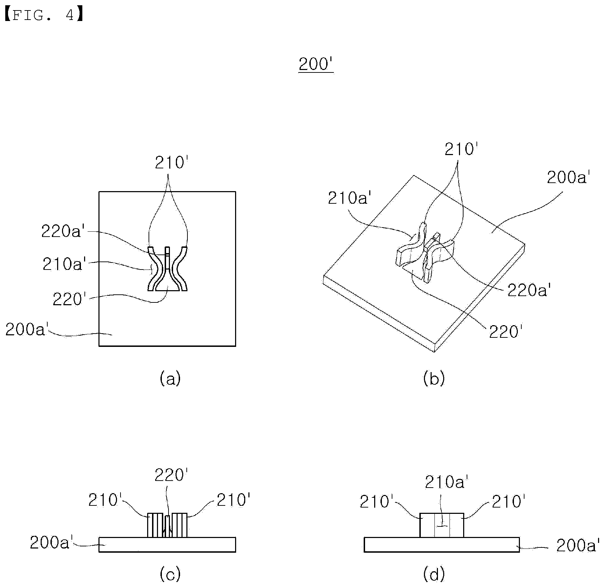

FIGS. 4(a) to (d) are schematic views of a second mold provided to implement a tire facilitating a check of wear condition according to a second embodiment which belongs to the present invention.

As illustrated in FIG. 4, a second mold 200' includes a plate 200a', first molding parts 210', and a second molding part 220'.

When comparing with the first mold 100' of FIG. 1, the second mold 200' is different only in a shape of the second molding part 220' .

The second molding part 220' is formed in an inclined shape from one side to the other side of the first molding part 210', and a projection molding groove 220a' is formed on one side of the second molding part 220' to form a projection member 220a to be described below in the tread 1.

The second molding part 220' has a shape in which a middle portion thereof that is separated from a position of a concave portion 210a formed in the first molding part 210' is inclined to the other side thereof.

In terms of a shape and a technical configuration, the second mold 200' of FIG. 4 is quite similar to that described with reference to FIG. 1, therefore will not be described in detail.

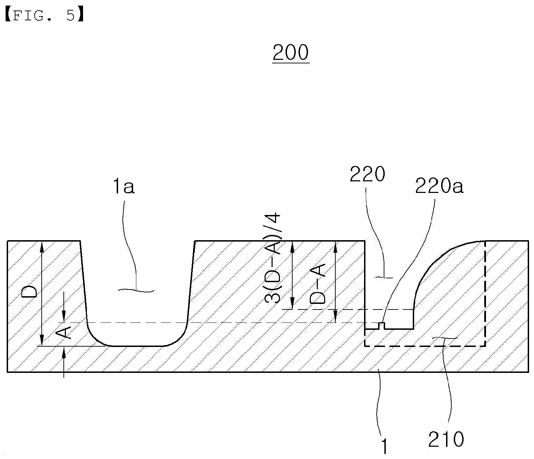

FIG. 5 is a schematic cross-sectional view of the tire facilitating a check of wear condition according to the second embodiment, which is formed by applying the second mold of FIG. 4 to a tread.

As illustrated in FIG. 5, the tire facilitating a check of wear condition includes a wear mark 200 engraved in the tread 1 to provide information on a degree of wear of the tread 1, and the wear mark 200 includes guide groove parts 210 and an indicator groove part 220.

The wear mark 200 is engraved in such a way that the second mold 200' is applied to the tread 1 so that the wear mark 200 is formed therein.

When comparing with the wear mark 100 illustrated in FIG. 2, the wear mark 200 is different only in a shape of the indicator groove part 220.

The indicator groove part 220 includes one groove, and the groove has a difference in depths from one side to the other side of the guide groove part 210 so that the tread 1 is formed in an inclined shape.

Further, when a depth of the groove 1a is D, a wear threshold may be D-A. The indicator groove part 220 is processed to have an inclined surface, and a curved surface of the inclined surface is formed being engraved so that the curved surface is inclined by a depth of 3(D-A)/4 within the wear threshold (D-A).

Further, the groove is formed on the other side of the guide groove part 210 being engraved so that the projection member 220a is formed in the tread 1 to display a warning symbol at the time of reaching the wear threshold of the tread 1.

The indicator groove part 220 is formed in the inclined shape with a difference in depths in order to be gradually worn out in an order from one side toward the other side of the guide groove part 210 according to the degree of wear of the tread 1.

In terms of a technical configuration, a shape, and an organic combination thereof, the wear mark 200 of FIG. 5 is the same as that described with reference to FIG. 3, therefore will not be described in detail.

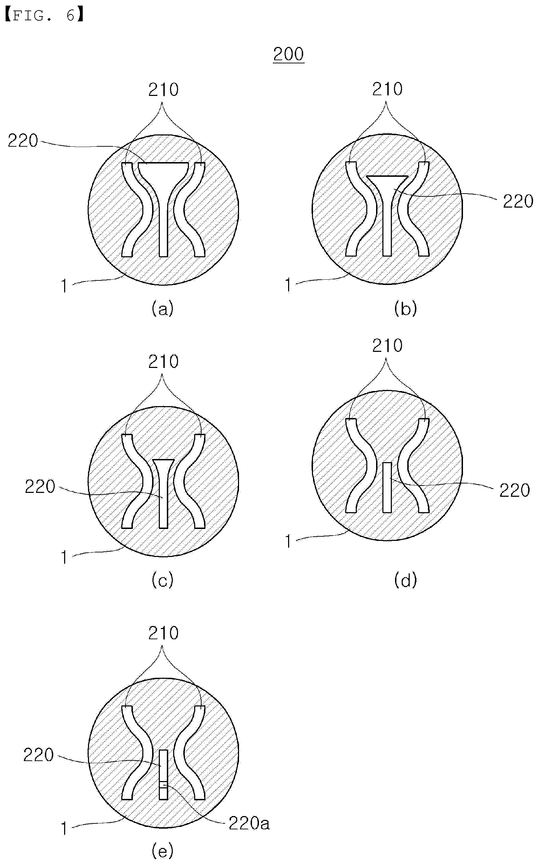

FIGS. 6(a) to (e) are schematic views illustrating use states in an order of wear of the tire facilitating a check of wear condition according to the second embodiment of FIG. 5.

The wear mark 200 is formed being engraved in the tread 1 by the first mold 200' illustrated in FIG. 4.

As illustrated in FIG. 6, the indicator groove part 220 is worn out in an order from FIG. 6(a) to FIG. 6(b), from FIG. 6(b) to FIG. 6(c), from FIG. 6(c) to FIG. 6(d), from FIG. 6(d) to FIG. 6(e), and in the case of FIG. 6(e), it shows that the tire needs to be replaced for safe driving of the vehicle, as the indicator groove part 220 is completely worn out to reach the wear threshold.

To prevent the wear of the tread 1 from further advancing, the projection member 220a is shown while a warning symbol of e.g. "!" shape appears.

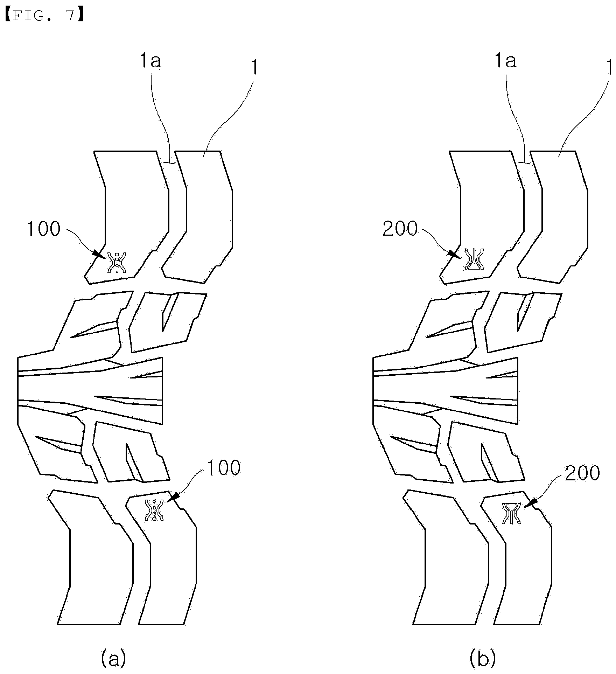

FIGS. 7(a) and (b) are schematic views illustrating use states of the tires facilitating a check of wear condition according to the first and second embodiments.

The wear marks 100 and 200 may be formed at any portion being engraved in the tread 1 contacting a road surface.

While the present invention has been described with reference to the preferred embodiment and modified examples, the present invention is not limited to the above-described specific embodiment and the modified examples.

### [Description of Reference Numerals]

100': first mold, 200': second mold
100'a, 200'a: plate, 110', 210': first molding part
120, 220': second molding part, 121': first molding protrusion
122': second molding protrusion, 123': third molding protrusion
124': fourth molding protrusion, 220a': projection molding groove
1: tread, 1a: groove
100,200: wear mark, 110, 210: guide groove part
110a, 210a: concave portion, 120, 220: indicator groove part
121: first groove, 122: second groove
123: third groove, 124: fourth groove
220a: projection member

## Claims

1. A tire facilitating a check of wear condition, comprising:
a wear mark (200) which is engraved in a tread (1) to provide information on a degree of wear of the tread (1),
wherein the wear mark (200) comprises:
a pair of guide groove parts (210) which are formed in the tread (1) being engraved so as to be symmetric to each other with a distance therebetween; and
an indicator groove part (220) which is formed in the tread (1) being engraved while having a depth increased from one side toward the other side in a longitudinal direction between the guide groove parts (210),
wherein the indicator groove part (220) includes one groove, and the groove is formed in an inclined shape so as to have a difference in depths from the one side to the other side of the pair of guide groove parts (210);
**characterized in that**
the groove formed on the other side of the pair of guide groove parts (210) has a projection member (220a) which is formed in the tread (1) so as to display a warning symbol at the time of reaching a wear threshold of the tread (1).

2. The tire facilitating a check of wear condition of claim 1, wherein a depth of the pair of guide groove parts (210) is identical to or shallower than a depth of a groove (1a) of the tread (1)

3. The tire facilitating a check of wear condition of claim 1 or 2, wherein the pair of guide groove parts (210) is formed to have a curved shape forming a sandglass shape in the tread (1).

## Patentansprüche

1. Reifen zur Erleichterung einer Prüfung des Verschleißzustands, umfassend:
eine Verschleißmarkierung (200), die in einer Lauffläche (1) eingeprägt ist, um Informationen zu einem Verschleißgrad der Lauffläche (1) bereitzustellen,
wobei die Verschleißmarkierung (200) Folgendes umfasst:
ein Paar von Führungsnutteilen (210), die in der Lauffläche (1) ausgebildet und so eingeprägt sind, dass sie mit einem Abstand dazwischen symmetrisch zueinander sind; und
einen Anzeigenutteil (220), der in der Lauffläche (1) ausgebildet und eingeprägt ist, wobei er eine Tiefe aufweist, die in einer Längsrichtung zwischen den Führungsnutteilen (210) von einer Seite zur anderen Seite zunimmt,
wobei der Anzeigenutteil (220) eine Nut beinhaltet und die Nut in einer geneigten Form ausgebildet ist, um eine Tiefendifferenz von der einen Seite zu der anderen Seite des Paars von Führungsnutteilen (210) aufzuweisen,
**dadurch gekennzeichnet, dass**
die auf der anderen Seite des Paars von Führungsnutteilen (210) ausgebildete Nut ein Vorsprungselement (220a) aufweist, das in der Lauffläche (1) ausgebildet ist, um zum Zeitpunkt des Erreichens eines Verschleißschwellenwerts der Lauffläche (1) ein Warnsymbol anzuzeigen.

2. Reifen zur Erleichterung einer Prüfung des Verschleißzustands nach Anspruch 1, wobei eine Tiefe des Paars von Führungsnutteilen (210) so groß wie oder flacher als eine Tiefe einer Nut (1a) der Lauffläche (1) ist.

3. Reifen zur Erleichterung einer Prüfung des Verschleißzustands nach Anspruch 1 oder 2, wobei das Paar Führungsnutteile (210) so ausgebildet ist, dass es eine gekrümmte Form aufweist, die in der Lauffläche (1) eine Sanduhrform ausbildet.

## Revendications

1. Pneu facilitant une vérification de l'état d'usure, comprenant :
une marque d'usure (200) qui est gravée dans une bande de roulement (1) pour fournir des informations sur un degré d'usure de la bande de roulement (1),
dans lequel la marque d'usure (200) comprend :
une paire de parties rainure de guidage (210) qui sont formées dans la bande de roulement (1) par gravure de façon à être symétriques l'une par rapport à l'autre avec une distance entre elles; et
une partie rainure d'indication (220) qui est formée dans la bande de roulement (1) par gravure tout en ayant une profondeur qui augmente d'un côté vers l'autre côté dans une direction longitudinale entre les parties rainure de guidage (210),
dans lequel
la partie rainure d'indication (220) inclut une rainure, et la rainure est formée dans une forme inclinée de façon à avoir une différence de profondeurs entre le un côté et l'autre côté de la paire de parties rainure de guidage (210) ;
**caractérisé en ce que** la rainure formée sur l'autre côté de la paire de parties rainure de guidage (210) comporte un élément en saillie (220a) qui est formé dans la bande de roulement (1) de façon afficher un symbole d'avertissement au moment d'atteindre un seuil d'usure de la bande de roulement (1).

2. Pneu facilitant une vérification de l'état d'usure selon la revendication 1, dans lequel une profondeur de la paire de parties rainure de guidage (210) est identique à ou moins profonde qu'une profondeur d'une rainure (1a) de la bande de roulement (1).

3. Pneu facilitant une vérification de l'état d'usure selon la revendication 1 ou 2, dans lequel la paire de parties rainure de guidage (210) est formée pour avoir une forme incurvée formant une forme de sablier dans la bande de roulement (1),
